# EUROPÄISCHE PATENTSCHRIFT

(11) **EP 1 826 664 B1**
(45) Veröffentlichungstag und Bekanntmachung des Hinweises auf die Patenterteilung: **16.12.2009**
(21) Anmeldenummer: 07003539.9
(22) Anmeldetag: 21.02.2007
(51) Int. Cl.: G06F 7/48

(54) **Verfahren und Schaltungsanordnung zum Berechnen eines Betrags eines komplexen Signals**
Method and circuit configuration for calculating the magnitude of a complex signal
Procédé et dispositif de commutation destinés au calcul d'un contenu d'un signal complexe

(30) Priorität: 28.02.2006 DE 102006009533
(43) Veröffentlichungstag der Anmeldung: 29.08.2007
(73) Patentinhaber: Trident Microsystems (Far East) Ltd., Grand Cayman (KY)
(72) Erfinder: Fritsch, Robert, 79279 Vörstetten (DE); Schur, Romed, 79183 Waldkirch (DE)
(74) Vertreter: Epping - Hermann - Fischer

(56) Entgegenhaltungen:
- EP-A- 0 365 226
- US-A1- 2004 161 026
- NAIK R ET AL: "Implementation of magnitude estimation algorithm for hearing aid" BIOMEDICAL CIRCUITS AND SYSTEMS, 2004 IEEE INTERNATIONAL WORKSHOP ON SINGAPORE 1-3 DEC. 2004, PISCATAWAY, NJ, USA,IEEE, 1. Dezember 2004 (2004-12-01), Seiten 127-130, XP010810005 ISBN: 978-0-7803-8665-5

## Beschreibung

Die Erfindung bezieht sich auf eine Schaltungsanordnung zum kontinuierlichen Berechnen eines Betrags eines komplexen Signals gemäß den oberbegrifflichen Merkmalen des Patentanspruchs 1.

Eine solche Schaltungsanordnung ist z. B. aus der Veröffentlichung NAIK R. et al: "Implementation of magnitude estimation algorithm for hearing aid" BIOMEDICAL CIRCUITS AND SYSTEMS, 2004 IEEE INTERNATIONAL WORKSHOP ON SINGAPORE 1-3 DEC. 2004, PISCATAWAY, NJ, USA, IEEE, 1. Dezember 2004 (2004-12-01), Seiten 127-130, XP010810005 ISBN: 978-0-7803-8665-5, bekannt.

In vielen praktischen Anwendungsfällen gibt es komplexe Signale, das heißt Signale aus komplexwertigen Zahlenpaaren, wobei für eine nachfolgende Signalverarbeitung ein möglichst genauer Betrag eines solchen komplexen Signals bzw. eine Abfolge von Beträgen einer Folge komplexer Signalwerte benötigt wird. Allgemein bekannt ist die Anwendung eines iterativen CORDIC-Verfahrens (CORDIC: COordinate Rotation DIgital Computer / Digitaler Koordinaten-Rotations-Computer), um aus digitalen komplexen Eingangswerten zweier Signalkomponenten eines komplexen Signals Beträge zu erzeugen und bereitzustellen. Bei diesem Verfahren wird eine Vielzahl von Verschiebungs- und Additions- /Subtraktions-Schritten zur Berechnung angewendet, wobei Multiplikationen entbehrlich sind. Eine solche Verfahrensweise ist jedoch sehr aufwändig. Nachteilhaft ist unabhängig von dem Aufwand auch die große Anzahl von Iterationsschritten, bis ein ausreichend genauer Betragswert erzielbar ist. Dies gilt insbesondere für die Bearbeitung von komplexen Signalen, wenn eine Vielzahl von Paaren aus Eingangswerten zweier Signalkomponenten in Abfolge zu verarbeiten ist.

Die Aufgabe der Erfindung besteht darin, eine Schaltungsanordnung zum kontinuierlichen Berechnen eines Betrags eines komplexen Signals bereitzustellen, wobei der Berechnungsaufwand reduziert werden soll.

Diese Aufgabe wird durch eine Schaltungsanordnung zum kontinuierlichen Berechnen eines gemittelten Betrags eines komplexen Signals mit den Merkmalen des Patentanspruchs 1 gelöst.

Vorteilhafte Ausgestaltungen sind Gegenstand abhängiger Ansprüche.

Bevorzugt wird ein Verfahren zum kontinulierlichen Berechnen eines gemittelten Betrages eines komplexen Signals, bei dem mittels eines insbesondere iterativen CORDIC-Verfahrens aus digitalen komplexen Eingangswerten zweier Signalkomponenten des komplexen Signals Beträge bzw. insbesondere Betragsquadrate bereitgestellt werden, wobei das Bereitstellen eines geglätteten Betrags bzw. Betragsquadrats durch das Verarbeiten der Eingangswerte mittels zweier kaskadierter CORDIC-Verfahren mit Rückkopplung durchgeführt wird. Entsprechend erfolgt dabei eine Filterung mittels CORDICs.

Das Mitteln bzw. Glätten des Betrags wird vorzugsweise durch eine Tiefpass-Filterung durchgeführt. Dabei handelt es sich nicht um einen gewöhnlichen Tiefpass sondern vielmehr um einen implizit in der CORDIC-Verschachtelung enthaltenen Tiefpass.

Mit jedem neuen komplexen Eingangs-Abtastwert wird ein über der Zeit gemittelter Betrag am Ausgang bereitgestellt, d.h. die Rate bzw. Abtastwerte pro Zeit der Eingangswerte entspricht vorzugsweise der Rate der Ausgangswerte.

Die Eingangswerte können mittels einer Verfahrensabfolge zum Umwandeln karthesischer Koordinaten in einen Radiuswert polarer Koordinaten umgesetzt werden. Mittels der beiden CORDIC-Verfahren wird vorzugsweise eine begrenzte Anzahl von maximal sechs oder nur wenig mehr CORDIC-Iterationen durchgeführt. Auch eine Umsetzung ganz ohne Iterationen wäre bei entsprechend geeigneten Eingangssignalen oder anderweitiger Vorverarbeitung insbesondere im Bereich der ersten Cordicstufe umsetzbar.

Die Eingangswerte werden vorzugsweise in einem ersten Schritt in einen Koordinatenbereich innerhalb von 45° um die positive reelle Koordinatenachse gespiegelt zum Bereitstellen eines absoluten Wertes der reellen Komponente. Die Spiegelung am Anfang ist jedoch nicht zwingend erforderlich, z.B. kann sie entfallen, wenn eine andere Verkettungsstruktur der CORDICs gewählt wird.

Das erste CORDIC-Verfahren bestimmt einen groben Betrag insbesondere mittels maximal vier Iterationsschritten. Bei dem ersten CORDIC-Verfahren wird abschließend vorzugsweise eine Tiefpass-Filterung mittels Skalierungs-Anordnungen durchgeführt. Dabei werden z.B. mittels einfach realisierbarer Verschiebe- und Addier-Schaltungen Multiplikationen mit einem festen Koeffizient in Art eines Filterkoeffizienten realisiert.

Das zweite CORDIC-Verfahren addiert das Quadrat des groben Betrags und zu dem Quadrat eines akkumulierten Betrags auf zum Bereitstellen eines ersten geglätteten Betrags, der zu einem Eingang des zweiten CORDIC-Verfahrens rückgeführt wird. Davon wird insbesondere implizit die Wurzel gezogen und so ein aktualisierter akkumulierter Betrag erhalten. Das zweite CORDIC-Verfahren wendet vorzugsweise nur maximal drei Iterationsschritte an. Bei dem zweiten CORDIC-Verfahren werden abschließend Tiefpass-Filterkoeffizienten indirekt mittels einer Verschiebe- und Skalierungs-Anordnung erzeugt und eine Tiefpass-Filterung durchgeführt. Die Tiefpasskoeffizienten sind dabei fest eingestellt. Sie sind vorgegeben durch die Verstärkung aufgrund der CORDIC-Iterationen multipliziert mit der anschließenden Skalierung.

Gemäß einer ersten Ausführungsform erfolgt somit eine Rückkopplung zum Eingang der zweiten CORDIC-Stufe. Dabei passiert die Tiefpassfilterung insbesondere in Zusammenhang mit der zweiten CORDIC-Stufe.

Alternativ wird der geglättete grobe Betrag des zweiten CORDIC-Verfahrens zu einem Eingang des ersten CORDIC-Verfahrens zurückgeführt. Gemäß einer zweiten Ausführungsform erfolgt somit eine Rückkopplung zum Eingang der ersten CORDIC-Stufe. Bei dieser Verkettungstruktur der CORDIC-Verfahren bzw. CORDIC-Stufen erfolgt die Tiefpassfilterung verteilt auf beide CORDICs.

Gemäß der Erfindung ist eine Schaltungsanordnung vorgesehen zum kontinuierlichen Berechnen eines gemittelten Betrags eines komplexen Signals mit einer CORDIC-Schaltung zum Bereitstellen von Beträgen mittels eines insbesondere iterativen CORDIC aus digitalen komplexen Eingangswerten zweier Signalkomponenten des komplexen Signals, wobei der CORDIC-Schaltung als einer ersten CORDIC-Stufe eine zweite CORDIC-Stufe zum Bereitstellen eines geglätteten Betrags bzw. Betragsquadrats durch das Verarbeiten der Eingangswerte mittels der kaskadiert angeordneten ersten und zweiten CORDIC-Stufen mit Rückkopplung nachgeschaltet ist, wobei eine Tiefpass-Filterung darin implizit enthalten ist.
Mit einer Spiegelschaltung gemäß einer ersten Ausführungsform können die Eingangswerte in einem ersten Schritt in einen Koordinatenbereich innerhalb von 45° um die positive reelle Koordinatenachse gespiegelt werden zum Bereitstellen eines absoluten Wertes der reellen Komponente für die erste CORDIC-Stufe.

Die erste CORDIC-Stufe weist vorzugsweise maximal vier Iterationsstufen auf. Die erste CORDIC-Stufe bildet bevorzugt eine Skalierungs-Filteranordnung zum Durchführen einer Tiefpass-Filterung auf Ausgabewerte der ersten Iterationsstufen und zum Bereitstellen eines groben Betrags aus.

Bei der zweiten CORDIC-Stufe werden ein an einem Eingang angelegter grober Betrag der ersten CORDIC-Stufe und ein akkumulierter Betrag aufaddiert zum Bereitstellen eines ersten geglätteten Betrags als dem akkumulierten Betrag, welcher einem weiteren Eingang der zweiten CORDIC-Stufe rückgeführt wird. Die zweite CORDIC-Stufe wendet vorzugsweise maximal drei Iterationsstufen an. In der zweiten CORDIC-Stufe ist vorzugsweise eine abschließende darin implizite Tiefpass-Filteranordnung umgesetzt zum Bereitstellen des akkumulierten Betrags als dem gemittelten Betrag.

Gemäß einer zweiten Ausführungsform der Schaltungsanordnung wird ein Ausgang der zweiten CORDIC-Stufe auf einen Eingang der ersten CORDIC-Stufe zurückgeführt.

Ermöglicht wird somit eine einfache Berechnung eines geglätteten Betrags eines komplexen Signals. Ein Block zum Umsetzen karthesischer Koordinaten zu einem geglätteten Radiuswert als Betragswert berechnet einen geglätteten absoluten Wert des komplexwertigen Eingangssignals unter Verwendung zweier kaskadiert angeordneter CORDICs bzw. zweier derart in Abfolge angewendeter CORDIC-Verfahren. Ein solcher Block implementiert das Maß der Leistung, insbesondere das Maß der Wurzel der mittleren Leistung des Signals. Dies kann verwendet werden für beispielsweise eine adaptive Verstärkungssteuerung (AGC / Adaptive Gain Control) oder eine Fehlerverhältnis-Modulation (MER / Modulation Error Ratio). Vorteilhafterweise wird für den Block bzw. eine entsprechende Verfahrensweise keine Multiplikation benötigt. Bereits vorzugsweise nur sechs CORDIC-Iterationen sind ausreichend für eine in der Mittelung angemessene Genauigkeit durch die beiden CORDIC-Berechnungen.

Da der Block für Eingangssignale mit Spitzenwerten nicht höher als dem Dreifachen der durchschnittlichen Leistung besonders vorteilhaft einsetzbar ist, kann zur Verbesserung der Berechnung insbesondere im Fall von diesem Kriterium nicht unterliegenden Signalen eine Zeitkonstante eines Glättungsfilters entsprechend erhöht werden. Letztendlich wird somit der absolute Wert eines komplexen Eingangssignals mit zwei Signalkomponenten berechnet, wobei eine Glättung durch ein einfaches Tiefpassfilter durchgeführt wird, um letztendlich das geglättete Ausgangssignal als Betrag bzw. als Abfolge von Betragswerten bereitzustellen.

Ein Ausführungsbeispiel wird nachfolgend anhand der Zeichnung näher erläutert. Es zeigen:
- Fig. 1: schematisch Komponenten zur Verarbeitung eines komplexen Signals zu einem geglätteten Betrag in schematischer Anordnung,
- Fig. 2: eine Eingangsstufe der Anordnung gemäß Fig. 1 in detaillierterer Darstellung,
- Fig. 3: eine erste CORDIC-Anordnung als weitere Komponente der Anordnung gemäß Fig. 1,
- Fig. 4: eine weitere CORDIC-Komponente als nachfolgender Komponente der Anordnung gemäß Fig. 1,
- Fig. 5: schematisch eine Realisierung in Form einer integrierten Schaltungsanordnung und
- Fig. 6: schematisch den Grundgedanken einer weiteren Ausführungsform.

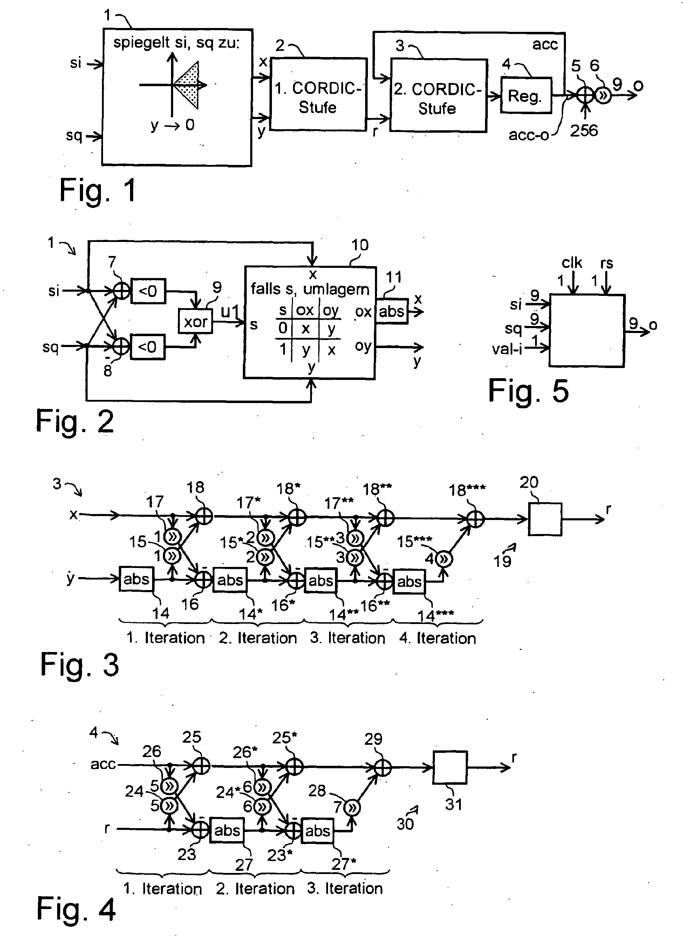

Fig. 1 zeigt ein Blockdiagramm einer bevorzugten Schaltungsanordnung. An einem Signaleingang einer Spiegelschaltung 1 wird ein komplexes Signal mit zwei Signalkomponenten si, sq bzw. entsprechenden Abfolgen von Eingangswerten angelegt. Bei dem dargestellten Ausführungsbeispiel wird davon ausgegangen, dass jeweils ein vorzugsweise mehrkomponentiges Signal angelegt wird. Die Spiegelschaltung 1 dient dazu, die in Art von Quadratur-Signalkomponenten angelegten Signalkomponenten si, sq in karthesische Koordinatenwerte x, y umzusetzen. Dabei werden die Eingangswerte in einem ersten Schritt in einen Koordinatenbereich von 45° oberhalb bzw. unterhalb der positiven reellen Koordinatenachse der Koordinatenebene gespiegelt. Ziel ist somit eine Rotation der Phase zu Null, das heißt des komplexen Koordinatenwertes y gegen bzw. zu Null. Dies wird durchgeführt, um einen reellen Koordinatenwert x als Betragswert der angelegten eingegebenen Signalkomponenten si, sq zu erhalten. Die Spiegelschaltung 1 stellt somit einen ersten absoluten Wert der reellen Komponente bereit.

Die von der Spiegelschaltung 1 ausgegebenen Koordinatenwerte x, y werden einer ersten CORDIC-Stufe 2 angelegt, welche dazu dient, aus den angelegten Koordinatenwerten x, y einen ersten groben Betrag r in Art eines Radiuswertes bereitzustellen. In der ersten CORDIC-Stufe 2 wird bereits eine erste Tiefpassfilterung durchgeführt.

Der grobe Betrag r wird einer zweiten CORDIC-Stufe 3 angelegt, welche weitere CORDIC-Iterationen durchführt und implizit eine zweite Tiefpass-Filterung durchführt. Der von der zweiten CORDIC-Stufe 3 erzeugte Wert bzw. die Abfolge von Werten wird einem Akkumulationsregister 4 angelegt. Ein akkumulierter Betrag acc des Akkumulationsregisters 4 wird zu einem weiteren Eingang der zweiten CORDIC-Stufe 3 zurückgeführt und neben dem groben Betrag r für die Iteration in der zweiten CORDIC-Stufe 3 verwendet. Durch die zweite CORDIC-Stufe 3 und das Akkumulationsregister 4 wird somit ein neuer Radius bzw. Betragswert bestimmt und zu dem akkumulierten Betrag acc hinzuaddiert, welcher im Allgemeinen viel größer ist. Außerdem kann am Ausgang dieser Anordnung der akkumulierte Betrag acc gleich abgegriffen werden und nach gegebenenfalls einer Addition in einer Addierund/oder Subtraktions-Anordnung 5 und nach einer Verschiebung in einer Verschiebeanordnung 6 als auszugebender geglätteter Betrag o bereitgestellt werden. Vorteilhafterweise sind insbesondere in der zweiten CORDIC-Stufe 3 nur drei CORDIC-Iterationen ausreichend, um den akkumulierten Betrag acc bzw. den geglätteten Betrag o in einer ausreichenden Genauigkeit zu erhalten.

Fig. 2 skizziert beispielhaft Komponenten der Spiegelschaltung 1, wobei allgemein bei den Figuren Komponenten und Verfahrensschritte zu bereits beschriebenen Aspekten unter Verweis auf die übrigen Ausführungen nicht erneut beschrieben werden. Im wesentlichen besteht die Spiegelung in der Spiegelschaltung 1 aus zwei Additionen bzw. einer Addition und einer Subtraktion und einer Ausschließlich-oder-Schaltung xor bezüglich der Vorzeichen-Bit der Additionsergebnisse zum Bereitstellen eines Schaltsignals u1. Das Schaltsignal u1 bestimmt, ob der erste, reelle Komponentenwert x oder der zweite, theoretisch imaginäre Komponentenwert y umzulagern (swap) sind oder nicht. Letztendlich wird der absolute Wert bzw. Betrag des ersten, reellen Komponentenwerts x genommen.

Bei der beispielhaften Ausführungsform werden die beiden Signalkomponenten si, sq den Eingängen einer Addier- und/oder Subtraktions-Anordnung 7 zur Addition angelegt. Außerdem werden die beiden Signalkomponenten si, sq einem Additionseingang bzw. einem Subtraktionseingang einer weiteren Addier- und/oder Subtraktions-Anordnung 8 angelegt. Das Vorzeichenbit der beiden Addier- und/oder Subtraktions-Anordnungen 7, 8 wird der Ausschließlich-oder-Schaltung 9 angelegt, welche das Schaltsignal u1 bereitstellt.

Das Schaltsignal u1 wird einer Entscheidungs-Anordnung 10 angelegt, welcher an einem ersten Eingang die erste Signalkomponente si und ein einem zweiten Signaleingang die zweite Signalkomponente sq angelegt sind. Die Entscheidungs-Anordnung 10 gibt zwei Koordinatenwerte x, y an entsprechenden Ausgängen ox, oy aus, wobei für die erste, reelle Koordinatenkomponente x der entsprechende Wert über einen Betrags-Ausgabeanschluss 11 zum Ausgeben von Betragwerten abs ausgegeben wird. Das an einem Schalteingang s angelegte Schaltsignal u1 bewirkt eine Steuerung der Ausgänge abhängig vom Zustand der am Eingang angelegten Signalkomponenten si, sq. Bei einem Schaltsignal mit Wert 0 wird am ersten, reellen Ausgang ox der Wert der ersten Signalkomponente si und am zweiten Ausgang oy der Wert der zweiten Signalkomponente sq angelegt und ausgegeben. Anderenfalls werden die beiden Signalkomponenten si, sq in umgekehrter Abfolge an den Ausgängen ox, oy angelegt.

Fig. 3 zeigt eine beispielhafte Schaltung der ersten CORDIC-Stufe 2. An Eingängen liegen die beiden Koordinatenwerte x, y bzw. Abfolgen von Koordinatenwerten x, y mit jeweils neuen Werten bzw. Bit an. In der ersten CORDIC-Stufe 2 werden aufeinander folgend vier CORDIC-Iterationen durchgeführt.

Der ersten CORDIC-Stufe 2 werden Koordinatenwerte x, y optional über jeweils eine Verschiebe-Anordnung angelegt. Der zweite Koordinatenwert y wird an ein Betrag-Ausgabeglied 14 angelegt, welches ein erstes Element der ersten Iterationsstufe darstellt. Dessen Ausgangswert wird sowohl einer weiteren Verschiebe-Anordnung 15 als auch einer weiteren Addier- und/oder Subtraktions-Anordnung 16 angelegt. Deren Ausgang bildet auf der Seite des zweiten Koordinatenwertes y das Ende der ersten Iterationsstufe. Von dem anderen Eingang aus betrachtet werden zweite Koordinatenwerte x der Verschiebe-Anordnung 12 einer weiteren Verschiebe-Anordnung 17 und einem Eingang einer weiteren Addier- und/oder Subtraktions-Anordnung 18 angelegt. Der Ausgang der weiteren Addier- und/oder Subtraktions-Anordnung 18 bildet auf dieser Seite bzw. Leitung den Ausgang der ersten Iterationsstufe. Von den beiden Verschiebe-Anordnungen 15, 17 der ersten Iterationsstufe wird der einfach verschobene Wert jeweils der Addier- und/oder Subtraktions-Anordnung 18 bzw. 16 der anderen Seite angelegt. Im Abschnitt des zweiten Koordinatenwertes y findet dabei eine Subtraktion statt.

Der ersten Iterationsstufe folgen eine zweite und eine dritte Iterationsstufe mit entsprechenden Komponenten, welche entsprechend mit einem * bzw. zwei ** gekennzeichnet sind. Die Verschiebe-Anordnungen 15*, 17*, 15**, 17** der zweiten und der dritten Iterationsstufe nehmen dabei eine um jeweils einfach erhöhte Verschiebung vor. In einer nachfolgenden vierten Iterationsstufe werden auf dem Zweig mit dem zweiten Koordinatenwert y befindliche Werte durch ein weiteres Betrags-Ausgabeglied 14*** und eine weitere vierfach Verschiebe-Anordnung 15*** einer Addieranordnung 18*** zugeführt, an deren anderem Additionseingang direkt Ausgangswerte des anderen Ausgangs der dritten Iterationsstufe angelegt werden.

Bereitgestellt werden als Summations-Ergebnis Werte, welche Eingangswerte einer Skalierungsstufe 19 zur Tiefpass-Filterung ausbilden. Die Skalierungsstufe 19 ist stellvertretend durch einen Verstärker 20 skizziert, dem diese Eingangswerte angelegt werden. Ausgangswerte des Verstärkers 20 bilden den groben Betrag r und somit den Ausgangswert der ersten CORDIC-Stufe 2. Tiefpasskoeffizienten werden dabei fest eingestellt. Sie sind insbesondere vorgegeben durch die Verstärkung aufgrund der CORDIC-Iterationen multipliziert mit der anschließenden Skalierung.

Innerhalb der CORDIC-Stufen werden jedes Mal pro Takt Bit fallengelassen. Beibehalten werden dabei die niederwertigsten Bit (LSB / Least Significant Bit). Dies wird mit Blick auf die üblichen Gegebenheiten des CORDIC durchgeführt. Das Ergebnis kann nur ein Vektor auf dem Einheitskreis sein.

Fig. 4 zeigt den weiteren Subblock mit einer beispielhaften Ausgestaltung der zweiten CORDIC-Stufe 3. An einem ersten Eingang der zweiten CORDIC-Stufe 3 wird der grobe Betrag r angelegt. An einem zweiten Eingang der zweiten CORDIC-Stufe 3 wird ein akkumulierter Betrag acc angelegt. Die zweite CORDIC-Stufe 3 besteht aus zwei Iterationsstufen mit einem Aufbau wie im Fall der ersten CORDIC-Stufe, wobei der Zweig mit dem groben Betrag r vom Eingang aus direkt zu einer Addier- und/oder Subtraktions-Anordnung 23 und an einer Verschiebe-Anordnung 24 für eine fünfte Verschiebung angelegt wird. Der akkumulierte Betrag acc des anderen Eingangs wird einer weiteren Addier- und/oder Subtraktions-Anordnung 25 und einer weiteren Verschiebe-Anordnung 26 angelegt. Der Ausgang der Verschiebe-Anordnung 24, welcher der grobe Betrag r angelegt wird, wird einem weiteren Additionseingang der Addier- und/oder Subtraktions-Anordnung 25 des anderen Zweigs angelegt. Der Ausgang der anderen Verschiebe-Anordnung 26 wird einem Subtraktionseingang der Addierund/oder Subtraktions-Anordnung 23 des Zweigs mit dem groben Betrag r angelegt. Die Ausgangswerte dieser beiden Addierund/oder Subtraktions-Anordnungen 23, 25 bilden Ausgangswerte der ersten Iterationsstufe der zweiten CORDIC-Stufe 3.

Diese Ausgangswerte der ersten Iterationsstufe werden einer zweiten Iterationsstufe mit einem Aufbau entsprechend den ersten Iterationsstufen der ersten CORDIC-Stufe 2 angelegt, wobei entsprechende Verschiebe-Anordnungen 24*, 26* für eine sechste Verschiebung vorgesehen sind. Die Ausgangswerte dieser zweiten Iterationsstufe der zweiten CORDIC-Stufe 3 werden einer dritten Iterationsstufe mit einem Aufbau entsprechend der vierten Iterationsstufe der ersten CORDIC-Stufe 2 angelegt. Diese dritte Iterationsstufe der zweiten CORDIC-Stufe 3 umfasst somit ein Betrags-Ausgabeglied 27, dessen Ausgangswerte einer siebten Verschiebe-Anordnung 28 angelegt werden, deren Ausgangswerte einer weiteren Addier- und/oder Subtraktions-Anordnung 29 zur Addition mit dem anderen Ausgangswert der zweiten Iterationsstufe angelegt werden.

Ausgangswerte dieser Addier- und/oder Subtraktions-Anordnung 29 werden einer zweiten Skalierungsstufe 30 zur Tiefpass-Filterung angelegt, welche vorzugsweise mittels einer Verstärker-Anordnung 31 ausgebildet wird. Der Akkumulator-Ausgangswert acc wird jedoch vorzugsweise noch der anhand Fig. 1 dargestellten Anordnung aus der Addieranordnung 5 und der weiteren Verschiebe-Anordnung 6 zum Bereitstellen des eigentlichen geglätteten Betrags o als Ausgangswert der Gesamtanordnung angelegt.

Fig. 5 zeigt eine beispielhafte Schaltungsanordnung mit entsprechenden Eingängen und Ausgängen für diverse Signale und Takte zur Umsetzung einer derartigen Schaltungsanordnung bzw. zum Durchführen einer entsprechenden Verfahrensweise mittels einer integrierten Schaltung. Dargestellt sind zwei Eingänge zum Anlegen der Signalkomponenten si, sq als eine in-phasige Komponente des Eingangssignals und als eine Quadratur-Komponente des Eingangssignals. Außerdem wird ein Steuersignal val-i angelegt, welches anzeigt, ob das Eingangssignal gültig ist oder nicht. Weitere Eingänge dienen zum Anlegen eines Systemtakts clk, auf dem vorzugsweise sämtliche weiteren Signale beruhen, wobei der Systemtakt clk als Betriebstakt des außerbandigen Signalteils dient. Vorgesehen ist vorzugsweise auch ein Eingang zum Anlegen eines Rücksetzsignals rs für die Schaltungsanordnung. Zum Ausgeben des geglätteten Betrags o ist ein entsprechender Ausgang vorgesehen. Vorzugsweise dienen die Eingänge für die Signalkomponenten si, sq und der Ausgang zum Ausgeben des geglätteten Betrags o zum Anlegen vorzugsweise mehrwertiger Signale.

Die Eingangswerte werden gemäß Fig. 1 in einem ersten Schritt in einen Koordinatenbereich innerhalb von 45° um die positive reelle Koordinatenachse gespiegelt zum Bereitstellen eines absoluten Wertes der reellen Komponente. Die Spiegelung am Anfang ist jedoch nicht zwingend erforderlich, z.B. kann sie entfallen, wenn eine andere Verkettungsstruktur der CORDICs gewählt wird.

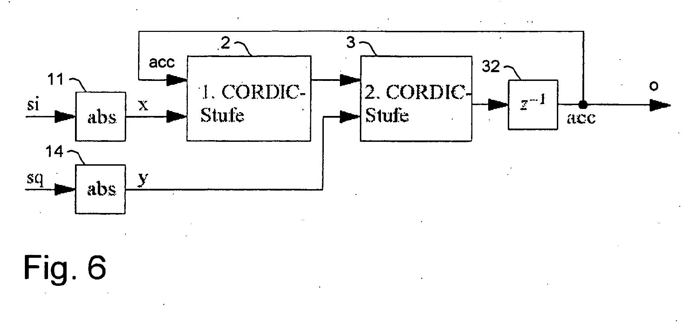

Gemäß einer zweiten Ausführungsform erfolgt, wie dies anhand Fig. 6 skizziert ist, eine Rückkopplung zum Eingang der ersten CORDIC-Stufe.

Dargestellt ist beispielhaft für eine solche Ausführungsform wieder ein Eingang, an dem die erste Signalkomponente si und die zweite Signalkomponente sq angelegt sind. Diese werden wieder jeweils einer Komponente mit einem Betrags-Ausgabeanschluss 11, 14 zum Ausgeben von Betragwerten abs zugeführt, um zwei Koordinatenwerte x, y als Betragswerte an entsprechenden Ausgängen auszugeben. Der erste Koordinatenwert x wird dem Eingang einer ersten CORDIC-Stufe 2 angelegt. Der zweite Koordinatenwert y wird dem Eingang einer zweiten CORDIC-Stufe 3 angelegt. Der Ausgang der zweiten CORDIC-Stufe 3 wird einem Verzögerungsglied 32 angelegt. Dessen Ausgangswert bildet den akkumulierten Ausgangswert acc, welcher dem Ausgang o der Schaltungsanordnung zugeführt wird.

Außerdem wird der akkumulierte Ausgangswert acc zusätzlich einem zweiten Eingang der ersten CORDIC-Stufe 2 angelegt. Der Ausgang der ersten CORDIC-Stufe 2 wird einem zweiten Eingang der zweiten CORDIC-Stufe 3 angelegt. Der geglättete bzw. gemittelte grobe Betrag des zweiten CORDIC-Verfahrens wird dabei zu einem Eingang des ersten CORDIC-Verfahrens zurückgeführt. Bei dieser Verkettungstruktur der CORDIC-Verfahren bzw. CORDIC-Stufen erfolgt die Tiefpassfilterung verteilt auf beide CORDICs. Außerdem kann eine anfängliche Spiegelung entfallen.

Für das Glätten kann es allgemein vorteilhaft sein, eine Zeitkonstante eines Glättungsfilters derart einzustellen, dass Spitzenwerte des eingegebenen Signals nicht höher als das Vierfache, insbesondere nicht höher als das Dreifache einer durchschnittlichen Leistung des eingegebenen Signals sind.

## Patentansprüche

1. Schaltungsanordnung zum kontinuierlichen Berechnen eines gemittelten Betrags eines komplexen Signals mit einer CORDIC-Schaltung zum Bereitstellen von Beträgen mittels eines CORDIC aus digitalen komplexen Eingangswerten zweier Signalkomponenten (si, sq) des komplexen Signals,
**dadurch gekennzeichnet, dass**
der CORDIC-Schaltung als einer ersten CORDIC-Stufe (2) eine zweite CORDIC-Stufe (3) zum Bereitstellen eines geglätteten Betrags (o) durch das Verarbeiten der Eingangswerte mittels der kaskadiert angeordneten ersten und zweiten CORDIC-Stufen (2, 3) mit Rückkopplung nachgeschaltet ist, wobei eine Tiefpass-Filterung darin implizit enthalten ist.

2. Schaltungsanordnung nach Anspruch 1, mit einer Anordnung zum Bereitstellen eines über die Zeit gemittelten Betrags am Ausgang mit jedem neuen komplexen Eingangs-Abtastwert.

3. Schaltungsanordnung nach Anspruch 1 oder 2 mit einer Spiegelschaltung (1) zum Spiegeln der Eingangswerte in einem ersten Schritt in einen Koordinatenbereich innerhalb von 45° um die positive reelle Koordinatenachse (x) zum Bereitstellen eines absoluten Wertes der reellen Komponente für die erste CORDIC-Stufe (2).

4. Schaltungsanordnung nach einem der Ansprüche 1 bis 3, bei der die erste CORDIC-Stufe (2) Iterationsstufen aufweist.

5. Schaltungsanordnung nach einem der Ansprüche 1 bis 4, bei der die erste CORDIC-Stufe (2) eine Skalierungsanordnung (19) zum impliziten Durchführen einer Tiefpass-Filterung auf Ausgabewerte der ersten Berechnungsstufe und zum Bereitstellen eines groben Betrags (r) aufweist.

6. Schaltungsanordnung nach einem der Ansprüche 1 bis 5, bei der die zweite CORDIC-Stufe (3) einem an einem Eingang eingegebenen groben Betrag (r) der ersten CORDIC-Stufe (2) und einen akkumulierten Betrag (acc) aufaddiert zum Bereitstellen eines ersten geglätteten Betrags als dem akkumulierten Betrag (acc), welcher zu einem weiteren Eingang der zweiten CORDIC-Stufe (3) rückgekoppelt wird.

7. Schaltungsanordnung nach einem der Ansprüche 1 bis 6, bei der ein Ausgang der zweiten CORDIC-Stufe (3) auf einen Eingang der ersten CORDIC-Stufe (2) rückgekoppelt wird.

8. Schaltungsanordnung nach Anspruch 1 oder 7, bei der in der ersten und/oder der zweiten CORDIC-Stufe (2, 3) eine abschließende darin implizit enthaltene Tiefpass-Filteranordnung umgesetzt ist zum Bereitstellen des akkumulierten Betrags (acc) als gemitteltem Betrag.

## Claims

1. A circuit arrangement for the continuous calculation of an averaged amount of a complex signal with a CORDIC circuit for providing amounts by means of a CORDIC from digital complex input values of two signal components (si, sq) of the complex signal,
**characterized in that**
the CORDIC circuit as a first CORDIC stage (2) is followed by a second CORDIC stage (3) for providing a smoothed amount (o) by processing the input values by means of the cascaded first and second CORDIC stages (2, 3) with feed-back, a low-pass filtering process being implicitly contained therein.

2. The circuit arrangement according to claim 1, comprising an arrangement for providing an amount, which is averaged over time, at the output with each new complex input sample value.

3. The circuit arrangement according to claim 1 or 2, comprising a mirror circuit (1) for mirroring the input values in a first step into a coordinate area within 45° about the positive real axis of coordinates (x) for providing an absolute value of the real component for the first CORDIC stage (2).

4. The circuit arrangement according to any one of claims 1 to 3, wherein the first CORDIC stage (2) comprises iteration stages.

5. The circuit arrangement according to any one of claims 1 to 4, wherein the first CORDIC stage (2) comprises a scaling arrangement (19) to implicitly carry out a low-pass filtering process on output values of the first calculation stage and to provide an approximate amount (r).

6. The circuit arrangement according to any one of claims 1 to 5, wherein an approximate amount (r) of the first CORDIC stage (2) entered at an input and an accumulated amount (acc) are added up by the second CORDIC stage (3) to provide a first smoothed amount as the accumulated amount (acc) which is fed back to a further input of the second CORDIC stage (3).

7. The circuit arrangement according to any one of claims 1 to 6, wherein an output of the second CORDIC stage (3) is fed back to an input of the first CORDIC stage (2).

8. The circuit arrangement according to claim 1 or 7, wherein, in the first and/or second CORDIC stage (2, 3), a final low-pass filter arrangement implicitly contained therein is implemented to provide the accumulated amount (acc) as the averaged amount.

## Revendications

1. Montage de circuits destiné à calculer en continu un montant moyenné d'un signal complexe avec un circuit CORDIC pour fournir des montants moyennant un CORDIC à partir de valeurs d'entrée numériques complexes de deux composantes de signal (si, sq) du signal complexe,
**caractérisé en ce que**
un deuxième étage CORDIC (3), destiné à fournir un montant lissé (o) via le traitement des valeurs d'entrée moyennant les premier et deuxième étages CORDIC (2, 3) disposés en cascade avec rétroaction, est placé en aval du circuit CORDIC faisant office de premier étage CORDIC (2), un filtrage passe-bas y étant implicitement contenu.

2. Montage de circuits selon la revendication 1, comportant un montage destiné à fournir en sortie un montant moyennée dans le temps à chaque nouvelle valeur complexe de balayage d'entrée.

3. Montage de circuits selon la revendication 1 ou 2, comportant un circuit miroir (1) destiné à refléter dans une première étape les valeurs d'entrée dans une plage de coordonnées comprise dans 45° autour de l'axe de coordonnées positif réel (x) afin de fournir une valeur absolue des composantes réelles pour le premier étage CORDIC (2).

4. Montage de circuits selon l'une des revendications 1 à 3, où le premier étage CORDIC (2) présente des étages d'itération.

5. Montage de circuits selon l'une des revendications 1 à 4, où le premier étage CORDIC (2) présente un montage de mise à l'échelle (19) destiné à effectuer implicitement un filtrage passe-bas sur des valeurs de sortie du premier étage de calcul et à fournir un montant approximatif (r).

6. Montage de circuits selon l'une des revendications 1 à 5, où le deuxième étage CORDIC (3) additionne un montant approximatif (r) du premier étage CORDIC (2), qui est entré à une entrée, et un montant accumulé (acc) afin de fournir un premier montant lissé constituant le montant accumulé (acc), lequel est relié par rétroaction à une autre entrée du deuxième étage CORDIC (3).

7. Montage de circuits selon l'une des revendications 1 à 6, où une sortie du deuxième étage CORDIC (3) est reliée par rétroaction à une entrée du premier étage CORDIC (2).

8. Montage de circuits selon la revendication 1 ou 7, où, dans le premier et/ou le deuxième étage CORDIC (2, 3), un montage terminal de filtre passe-bas y étant contenu implicitement est mis en oeuvre pour fournir le montant accumulé (acc) comme montant moyenné.
